# EUROPÄISCHE PATENTANMELDUNG

(11) **EP 0 567 876 A1**
(43) Veröffentlichungstag der Anmeldung: **03.11.1993**
(21) Anmeldenummer: 93106286.3
(22) Anmeldetag: 19.04.1993
(51) Int. Cl.: B29B 17/02, C03C 1/02

(54) **Verfahren und Vorrichtung zur Aufbereitung von Verbundglasscheiben und Rückgewinnung der Werkstoffkomponenten**

(30) Priorität: 24.04.1992 DE 4213450
(71) Anmelder: Kehler, Dirk, Dipl.-Ing., D-30827 Garbsen (DE); Früh, Thomas, Dipl.-Chem., D-37115 Duderstadt (DE); Tunc, Sabri, Dr.rer.nat., D-30177 Hannover (DE); Hallensleben, Manfred Ludwig, Prof.Dr.rer.nat., D-79299 Wittnau (DE); Weber, Rüdiger, Prof. Dr.-Ing. habil., D-30916 Isernhagen HB (DE)
(72) Erfinder: Kehler, Dirk, Dipl.-Ing., D-30827 Garbsen (DE); Früh, Thomas, Dipl.-Chem., D-37115 Duderstadt (DE); Tunc, Sabri, Dr.rer.nat., D-30177 Hannover (DE); Hallensleben, Manfred Ludwig, Prof.Dr.rer.nat., D-79299 Wittnau (DE); Weber, Rüdiger, Prof. Dr.-Ing. habil., D-30916 Isernhagen HB (DE)
(74) Vertreter: Mende, Eberhard, Dipl.-Ing.

(57) **Zusammenfassung**

Zur Aufbereitung von aus einem Schichtenaufbau von Glastafeln und mindestens einer Kunststoffolie oder einem Kunststoffkörper bestehenden Verbundglasscheiben und zur Rückgewinnung der einzelnen Werkstoffkomponenten, wobei die Glasscheiben vorzerkleinert werden, werden das Glas und die Kunststoffolie bzw. der Kunststoffkörper auf chemischem Wege voneinander getrennt.

## Beschreibung

Die vorliegende Erfindung betrifft ein Verfahren zur Aufbereitung von aus einem Schichtenaufbau von Glastafeln und mindestens einer Kunststoffolie oder einem Kunststoffkörper bestehenden Verbundglasscheiben und zur Rückgewinnung der einzelnen Werkstoffkomponenten, bei dem die Glasscheiben vorzerkleinert werden.

Im Fahrzeugbau, z. B. in Eisenbahnen, in Schiffen, in Flugzeugen und insbesondere im Kraftfahrzeugbau, aber in zunehmendem Maße auch im Baubereich werden seit langem gattungsgemäße Verbundglasscheiben verwendet. Diese auch als Sicherheitsverbundglas bezeichneten Schichtkörper bestehen zumindest im Bereich des Automobilbaues in der Regel aus drei Schichten, nämlich dem Außenglas, einer Poly(vinylbutyral)-Folie (PVB-Folie) und dem Innenglas. Für Spezialanwendungen hat man auch bereits eine zusätzliche Polycarbonatschicht und zur Anpassung der unterschiedlichen Volumenausdehnungskoeffizienten von Polycarbonat und Glas eine weitere PVB-Folie vorgesehen. Auch kann die innere Glasscheibe durch eine Acrylharzscheibe oder eine Platte aus amorphen Polyamiden ersetzt werden. Diese bekannten Kunststoffolien oder - körper in Kombination mit Glasscheiben erhöhen die passive Sicherheit z. B. im Automobilbau oder in der Architektur wesentlich, problematisch ist jedoch die Entsorgung von Verbundglasrückständen, da dieser nicht mehr auf Hausmülldeponien gelagert werden darf und eine Wiederaufarbeitung nach den heute bekannten Verfahren eine erhebliche Menge an Sondermüll hervorbringt.

Während in der Vergangenheit eine Wiederverwertung von Verbundwerkstoffen nicht ernsthaft in Betracht gezogen wurde, hat sich heute die Situation u. a. wegen des immer knapper werdenden Deponieraumes deutlich geändert. Hinzu kommt, daß das Problembewußtsein in Umweltfragen in der Bevölkerung ständig wächst, die Verbraucher sind zunehmend bereit, Produkte aus Sekundärrohstoffen nachzufragen und geringe Qualitätseinbußen hinzunehmen, wenn dadurch eine Entlastung der Umwelt erzielt wird.

Zur Aufbereitung von Verbundglasscheiben, wie sie vor allem in Kraftfahrzeugen und als Gebäudeverglasungen verwendet werden, hat man deshalb bereits vorgesehen (DE-PS 36 20 027), die Verbundglasscheiben durch ein kombiniertes Brechen und Zerreißen unter gleichzeitiger Einwirkung von Biegekräften vorzuzerkleinern. Anschließend werden die vorzerkleinerten Verbundglasscheibenstücke bis zu rieselfähigen Teilchen zerkleinert und durch mechanischen Druck die Verbundglasscheibenteilchen schließlich in Glas- und Kunststoffteilchen aufgeteilt. Durch Windsichten werden abschließend Glas- und Kunststoffteilchen sortiert.

Nachteilig bei diesem bekannten Verfahren ist neben dem hohen energetischen Aufwand und dem Werkzeugverschleiß für die Aufbereitung vor allem, daß eine Wiedergewinnung aller eine Verbundglasscheibe bildenden Werkstoffkomponenten nicht möglich ist bzw. nur mit erhöhtem zusätzlichen Aufwand möglich erscheint. Denn nach wie vor haftet noch ein relevanter Glasanteil an der Folie, so daß ihr originärer Einsatz in Verbundglasscheiben nicht mehr möglich ist, vielmehr muß sie deponiert werden.

Ausgehend von diesem bekannten Stand der Technik liegt der Erfindung deshalb die Aufgabe zugrunde, eine Möglichkeit der Aufbereitung von Verbundglasscheiben anzugeben, die eine tatsächliche Rückgewinnung der Werkstoffkomponenten erlaubt.

Gelöst wird diese Aufgabe gemäß der Erfindung dadurch, daß das Glas und die Kunststoffolie bzw. der Kunststoffkörper auf chemischem Wege voneinander getrennt werden. Verbundsicherheitsglas kann bei Anwendung der Erfindung nahezu vollständig wiederverwertet werden, das gilt für die eingefärbten oder ungefärbten Gläser ebenso wie für die eingesetzten Kunststoffmaterialien, die völlig frei auch von Glasfragmenten sind.

Als vorteilhaft hat es sich in Durchführung der Erfindung erwiesen, zur chemischen Trennung Laugen oder Säuren und/oder deren Salzlösungen oder Tensidlösungen bzw. organische Lösungsmittel in flüssiger oder gasförmiger Phase zu verwenden. Diese Mittel sind geeignet, für eine vollständige Trennung von Glas- und Kunststoffwerkstoffen zu sorgen, diese können für sich problemlos wiedergewonnen werden, beispielsweise können auch die Folienabfälle aus bekannten Verfahren in die Polymerrückgewinnung eingebracht werden.

Werden für den Glasverbund beispielsweise Folien oder Körper auf Basis von Poly (vinylbutyral) verwendet, das sich u. a. wegen seiner hohen Haftfähigkeit an Glaswerkstoffen im Markt durchgesetzt hat, dann hat es sich in Durchführung der Erfindung als vorteilhaft erwiesen, wäßrige Laugen bzw. wäßrige Säuren oder Lösungen ihrer Salze zur Trennung von Glas und Kunststoffolie oder -körper einzusetzen. Für den erfindungsgemäßen Prozeßablauf der Trennung und Rückgewinnung ist hierbei entscheidend, daß eine spätere vollständige Trennung von Polymer und Inhaltstoffen erreicht wird, daß das Poly (vinylbutyral) (PVB) in seinem chemischen Aufbau unverändert bleibt sowie die mittlere Molmasse nicht wesentlich verändert wird. Zudem ist entscheidend, daß die Molmassenverteilung sowie die Struktur der Polymerhauptkette gleich bleiben.

In gleicher Weise trägt dazu bei, wenn zur chemischen Trennung von Glas und PVB-Folie oder entsprechendem Kunststoffkörper wäßrige Tensidlösungen, Tensidlösungen organischer Lösungsmittel oder organische Lösungsmittel als Prozeßflüssigkeit verwendet werden.

Für die erfindungsgemäße Aufbereitung und Rückgewinnung der Werkstoffkomponenten ist mit entscheidend, daß eine Trennung von Buntglas und Weißglas in sortenreine Fraktionen ereicht wird. Hier trägt dazu bei, daß die Grenzflächenspannung der zur Ablösung des Glases benutzten Prozeßflüssigkeit gezielt steuerbar ist. Dann läßt sich nämlich bei den unterschiedlichen Gewichtsverhältnissen des für das Sicherheitsverbundglas verwendeten Weiß- und Buntglases erreichen, daß das Buntglas zeitlich früher als das Weißglas von der Kunststoffolie oder dem -körper gelöst wird.

Als für die Zwecke der Erfindung geeignet haben sich z. B. die Essigsäure (0,5 mol/l, ca. 90° C) und die Natronlauge (0,1 mol/l, ca. 90° C) erwiesen. Alternative Prozeßflüssigkeiten sind z. B. aliphatische Carbonsäuren und deren Salze sowie Tenside, wobei ein weiter Temperaturbereich, vorzugsweise aber zwischen 60° und 95° C, zur Durchführung der Trennung möglich ist. Entscheidende Parameter für den Trennprozeß GlasKunststoff sind u. a. die Größe der an der Kunststoffolie oder dem -körper haftenden Glasteilchen, ferner der chemische Charakter, die Temperatur sowie die Konzentration der Prozeßflüssigkeiten, die Lagerdauer und -temperatur des Verbundglases und schließlich die mechanische Beeinflussung des chemischen Trennvorganges.

So kann der Trenn- oder Ablöseprozeß durch eine Bedüsung der in Weiterführung der Erfindung vorgebrochenen Verbundglasscheiben beschleunigt werden, auch eine starke Verwirbelung der Prozeßflüssigkeit in einem Bad bei gleichmäßiger Temperaturverteilung, sowie die Bearbeitung der Scheiben mit rotierenden Bürsten führen zu einem beschleunigten Ablöse- oder Trennvorgang. Die aufzubereitende Verbundglasscheibe kann in der Schrägstellung mit den Prozeßflüssigkeiten behandelt werden, die Scheiben können aber auch senkrecht aufgehängt sein, wenn ein- oder beidseitig die Prozeßflüssigkeit herangebracht wird. Auch eine schwingende Anordnung der vorgebrochenen Scheibe kann zur Prozeßbeschleunigung eine bevorzugte Anwendung finden.

Zweckmäßig kann es in diesem Zusammenhang oft auch sein, die durch die chemische Trennung frei gewordenen Glasteile zusätzlich einer Spülung mit Wasser oder organischen Lösungsmitteln zu unterwerfen, um die durch die Handhabung ggf. noch anhaftenden Restmengen mit Sicherheit zu entfernen.

Zur Rückgewinnung der einzelnen Werkstoffkomponenten kommt es für die Erfindung darauf an, daß zunächst die Trennung von Glas und Kunststoffolie bzw. -körper erfolgt und anschließend die Trennung von Polymer und Begleitstoffen, wie z. B. Weichmacher, Stabilisator etc., vorgenommen wird. Zu diesem Zweck kann es mitunter auch vorteilhaft sein, für beide Fälle organische Lösungsmittel, wie beispielsweise Methanol, Ethanol, iso-Propanol, iso-Butanol, THF (Tetrahydrofuran) u.a, einzusetzen.

Um das Poly (vinylbutyral) von den Weichmachern und weiteren Inhaltstoffen (Begleitstoffen) zu trennen, wird die vom Glas ganz oder überwiegend befreite Folie oder auch der entsprechende Körper beispielsweise in niederen aliphatischen Alkoholen, niederen aliphatischen Glykolen, THF oder anderen bereits als gut geeignet bekannten organischen Lösungsmitteln aufgelöst. Die Trennung des Polymer von den Begleitstoffen und deren Rückgewinnung zum Zwecke der Wieder- oder Weiterverwertung kann dann durch Extraktion oder auch durch eine Filtration vorgenommen werden. So hat sich beispielsweise eine fest/flüssig-Extraktion z. B. mit niederen Ethern oder Ketonen als vorteilhaft erwiesen, wobei Farbstoffe, wie sie für sog. Farbkeile auf die Folie aufgebracht werden, dabei vollständig extrahiert werden können. Das Poly (vinylbutyral) kann in der Neuproduktion nach den wäßrigen Verfahren erneut eingebracht werden, die extrahierten Begleitstoffe können vorteilhaft zur Temperierung der chemischen Prozesse energetisch genutzt werden, wobei eine Aufkonzentrierung und Rückgewinnung des Extraktionsmittels vorgeschaltet werden kann.

Die Trennung und Rückgewinnung durch Filtration, z. B. in niederen Alkoholen und Ethern als Lösungsmittel, kann in kontinuierlichem Betrieb durchgeführt werden. Vorteihaft sind hierbei die langen Standzeiten der Filter, die auch mehrfach regenerierbar sind. Das aus der Lösung herausgefilterte Polymer kann anschließend in der Neuproduktion nach dem alkoholischen Verfahren erneut eingebracht werden. Auch hierbei können die erhaltenen Begleitstoffe zur Temperierung des Prozeßablaufes energetisch genutzt werden, wobei eine Aufkonzentrierung und Rückgewinnung des Lösungsmittels vorgeschaltet werden kann.

Unabhängig davon, welcher der beiden Varianten der Vorzug gegeben wird, ergibt sich im Zusammenhang mit der Erfindung eine vollständige Trennung von Polymer und Begleitstoffen, das Polymer kann originär wieder eingesetzt werden. Darüberhinaus können die Prozeßflüssigkeiten im Kreislauf geführt werden.

Wie bereits angedeutet, werden für die Durchführung der Erfindung die Verbundglasscheiben vorteilhaft vorgebrochen. Dabei erfolgt das Vorbrechen zweckmäßig durch Stoßeinwirkung. Auf diese Weise können auf der Bearbeitungsseite der Verbundglasscheibe bereits ca. 80 % des jeweiligen Glases sortenrein abgeschlagen werden, der Rest von ca. 20 % ist dann sehr fein vorgebrochen. Die auf der anderen Seite der Kunststoffolie oder des -körpers befindliche Glasscheibe ist dagegen nicht oder nur grob gebrochen.

Entscheidend für das Vorbrechen der Verbundglasscheibe ist, daß hierbei das Glas durch Stoßeinwirkung zerstört wird. Das Vorbrechen kann je nach gewählter Prozeßführung ein- oder beidseitig der Kunststoffolie oder des -körpers in einem Arbeitsschritt erfolgen, wobei die Stoßeinwirkung auf die Glasscheiben, ein- oder beidseitig, in einem definierten Winkel zur Glasoberfläche erfolgt. Der Arbeitswinkel kann z. B. 90° betragen, besondere Vorteile ergeben sich jedoch dann, wenn der Arbeitswinkel ungleich 90° beträgt, die Stoßeinwirkung also schräg zur Glasoberfläche erfolgt.

Durch das erfindungsgemäße Vorbrechen, bei dem, wie angedeutet, bereits der überwiegende Glasanteil von der Kunststoffolie bzw. dem Kunststoffkörper entfernt wird, ist es möglich, diesen Glasanteil, Bunt- oder Weißglas, bereits sortenrein abzuführen. Durch die unterschiedliche Größe und Dicke der an der Folie oder dem Körper noch anhaftenden Glasteilchen werden Farbsortierung und nachfolgende Prozeßdauer für die Trennung Glas-Kunststoff wirkungsvoll unterstützt.

Insbesondere Verbundglasscheiben, die im Kraftfahrzeugbau verwendet werden, weisen häufig metallische Einlagen auf, beispielsweise elektrische Heizdrähte, Antennendrähte etc.. Auch diese Bauelemente können mit dem Verfahren nach der Erfindung problemlos rückgewonnen werden. Denn im Gegensatz zum bekannten Verfahren wird die Verbundglasscheibe nicht durch Einwirkung hoher Scherkreäfte vorzerkleinert, sondern lediglich durch Stoßeinwirkung vorgebrochen, so daß die metallischen oder sonstigen Einlagen problemlos entfernt und der Wiederverwendung zugeführt werden können.

Verbundglasscheiben können aber auch, wie im Kraftfahrzeugbau ebenfalls üblich, Zusatzbeschichtungen aufweisen. Solche Zusatzbeschichtungen, nämlich Klebschichten, Keramikbedruckungen und anderes enthalten z. B. die Randbereiche der Frontscheibe eines Kraftfahrzeuges. Zur Stabilisierung der Karosserie und damit zur Erhöhung der passiven Sicherheit für die Insassen sind die Scheiben nämlich in die begrenzenden Rahmenteile des Kraftfahrzeuges eingeklebt. Solche Zusatzbeschichtungen oder andere den erfindungsgemäßen Aufbereitungs- und Rückgewinnungsprozeß störende Beschichtungen werden vorteilhaft vor dem Vorbrechen aus der Verbundglasscheibe heraus- bzw. von dieser abgetrennt.

Verbundglasscheiben, die gemäß der Erfindung aufbereitet werden sollen, liegen nicht immer im ausgebauten Zustand vor. Für eine beabsichtigte Wiedergewinnung ist es deshalb oft erforderlich, dem Vorbrechen der Verbundglasscheiben einen weiteren Verfahrensschritt vorzuschalten. Dieser Verfahrensschritt besteht bei Verbundglasscheiben mit partieller Zusatzbeschichtung, die sich noch im eingebauten Zustand befinden, darin, daß die jeweilige Verbundglasscheibe ohne partielle Zusatzbeschichtung aus der Umgebung herausgetrennt wird. Damit liegt die Scheibe bereits in dem Zustand vor, in dem sie dem beschriebenen Aufbereitungs- und Rückgewinnungsprozeß nach der Erfindung unmittelbar zugeführt werden kann.

Die Heraustrennung kann mit beliebigen Verfahren erfolgen, beispielsweise durch Laserschneiden oder Wasserstrahlabrasivschneiden, Brennschneiden, Plasmasägen o. ä.. Für eine schnelle industrie- und werkstattgerechte Demontage von Verbundglasscheiben beispielsweise im Kraftfahrzeugbau zum Zwecke der Wiederverwertung hat es sich jedoch als vorteilhaft erwiesen, zum Heraustrennen der Scheibe aus der Umgebung ein Trennschleifverfahren oder ein Glasschneideverfahren einzusetzen. Die Trennung des Glases erfolgt am keramischen Beschichtungsrand der in die Karosserie des Kraftfahrzeuges eingeklebten Verbundglasscheibe, nach der Demontage gelangt nur noch ein Materialverbund aus Weißglas, ggf. zusätzlich auch Buntglas und Poly (vinylbutyral) -Folie oder weitere Kunststoffkörper zur Wiederaufarbeitung, d. h. ohne Klebstoff-, Dichtungs-, Metall- oder Keramikresten, die die stoffliche Wiederverwertung stören würden.

Erfolgt für die Zwecke der Erfindung die Demontage der Verbundglasscheibe mittels eines Trennschleifverfahrens, ist es vorteilhaft, das Trennschleifen im Gegenlaufverfahren durchzuführen. Dieses Verfahren ermöglicht das Heraustrennen der Verbundglasscheibe ohne das der Innenraum, z. B. der Kraftfahrzeuginnenraum, durch den Schleifstaub verschmutzt wird und so Schwierigkeiten bei der Wiederverwertung der hier z. B. befindlichen Kunststoffteile zu erwarten sind. Zudem kann bei einem solchen Verfahren der Schleifstaub mit einer Absaugvorrichtung problemlos aufgefangen werden. Dabei wird die Absaugvorrichtung zweckmäßig während des Trennschleifens mit der Trennschleifvorrichtung mitlaufen, ein- oder beidseitig der Schleifscheibe ggf. paarweise angeordnete Führungsrollen, die zudem, wie auch die Schleifscheibe, federnd gelagert sein können, bieten Gewähr für eine exakte Trennung längs einer vorbestimmten Linie auch dann, wenn die Verbundglasscheibe gekrümmt ist.

Da für die Erfindung die Wiederverwertung sowohl des Glases als auch des Kunststoffes wesentlich ist, kommt es darauf an, das Vorbrechen als wesentliche Vorstufe hierfür und nicht einfach als eine beliebig durchzuführende Vorzerkleinerung der Verbundglasscheibe zu betrachten. Das Vorbrechen erfolgt deshalb in Durchführung der Erfindung durch ein- oder beidseitig der Verbundglasscheibe angeordnete Stoßwerkzeuge in Form umlaufender Stoßgewichte.

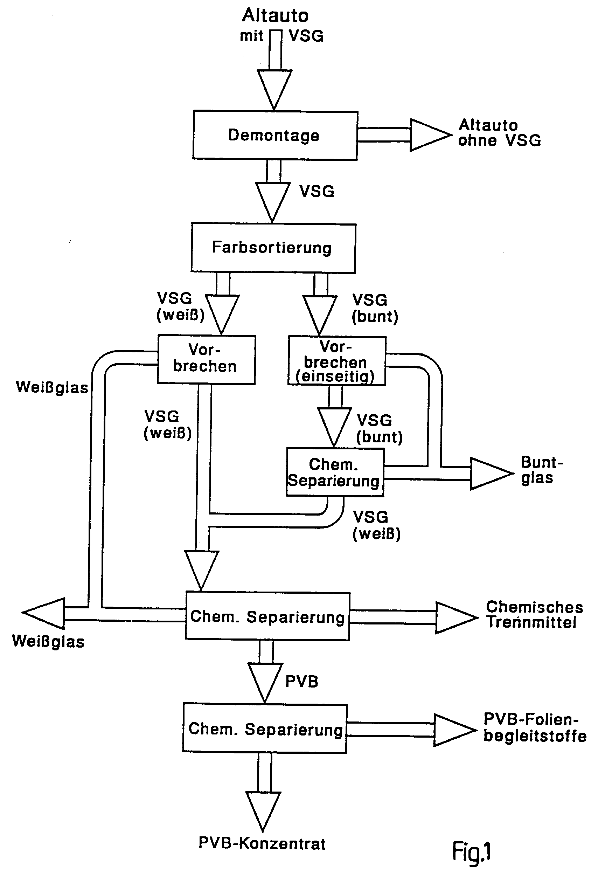

Die Erfindung sei anhand der in den Figuren 1 bis 3 als Ausführungsbeispiel dargestellten Aufbereitung und Rückgewinnung der Werkstoffkomponenten von KraftfahrzeugVerbundglasscheiben näher erläutert.

Die Fig. 1 zeigt das Fließbild eines Aufbereitungsverfahrens für noch im Altauto eingeklebte Verbundglasscheiben.

Bei der Demontage wird die Verbundglasscheibe (VSG) aus der Karosserie mittels des erfindungsgemäßen Trennschleifverfahrens so herausgeschnitten, daß Kleber, Keramikreste etc. am Auto verbleiben. Die herausgeschnittene Verbundglasscheibe wird anschließend der Farbsortierung zugeführt, eine anschließend aus Weißglas bestehende Scheibe wird erfindungsgemäß vorgebrochen, das hierbei bereits freiwerdende Glas wird sortenrein abgeführt. Die Poly (vinylbutyral) -Folie mit noch anhaftenden Glasteilchen wird der chemischen Separierung zugeführt. Hier wird die Folie z. B. mit einer wäßrigen Natronlauge oder einer wäßrigen Essigsäure behandelt. Nach einer ggf. noch anschließenden zusätzlichen Spülung werden die nunmehr restlichen Glasteilchen sortenrein abgeführt. Das verwendete Trennmittel, im Ausführungsbeispiel die Natronlauge oder Essigsäure, wird zur Regenerierung ab- und im Kreislauf wieder zurückgeführt.

In einem abschließenden Verfahrensschritt erfolgt aus der Poly (vinylbutyral) -Folie, die sogar frei von Glassplittern ist, die chemische Trennung des Polymer und der Begleitstoffe, etwa durch Auflösen der Folie mit anschließender Extraktion oder Filtration. Dabei ist wesentlich, daß das Polymer wieder originär eingesetzt werden kann, etwa als Neueinsatz in der Sicherheitsverbundglasherstellung oder auf gleichem Qualitätsniveau als Heißschmelzkleber oder als Grundiermittel im Schiffbau.

Hat die Farbsortierung eine Verbundglasscheibe mit einer getönten Scheibe auf der einen Seite erkannt, wird diese Scheibe jeweils einseitig vorgebrochen, das abfallende Buntglas wird sortenrein abgeführt, die noch anhaftenden Buntglasteilchen werden, wie oben anhand des Beispieles Weißglas beschrieben, von der Folie getrennt und ebenfalls sortenrein abgeführt. Das noch an der Folie haftende Weißglas wird anschließend der Folie in dem Verfahrensablauf "Weißglas" eingeführt und dort den beschriebenen Arbeitsschritten unterworfen. Die zeitlich unterschiedliche Einwirkung der Trennmittel auf die vorgebrochene Verbundglasscheibe läßt sich durch unterschiedliche Säuren- oder Laugenkonzentration, durch unterschiedliche Temperierung des Trennmittels sowie Anwendung unterschiedlicher mechanischer Mittel, Bad, Düsen, Bürsten, schwingende Anordnung der Scheibe usw., steuern.

Ein wesentlicher Bestandteil für die erfindungsgemäße Aufbereitung ist das von Zuatzbeschichtungen freie Herausschneiden hartverklebter Verbundglasscheiben. Das nach der Erfindung hierfür vorgeschlagene Trennschleifverfahren erlaubt eine schnelle industrielle sowie werkstattgerechte Demontage. Die Schneidzeit pro Scheibenaustrennung, insbesondere beim Einsatz von diamantbesetzten Schleifscheiben, ist gering. Auch die Werkzeugkosten können niedrig gehalten werden.

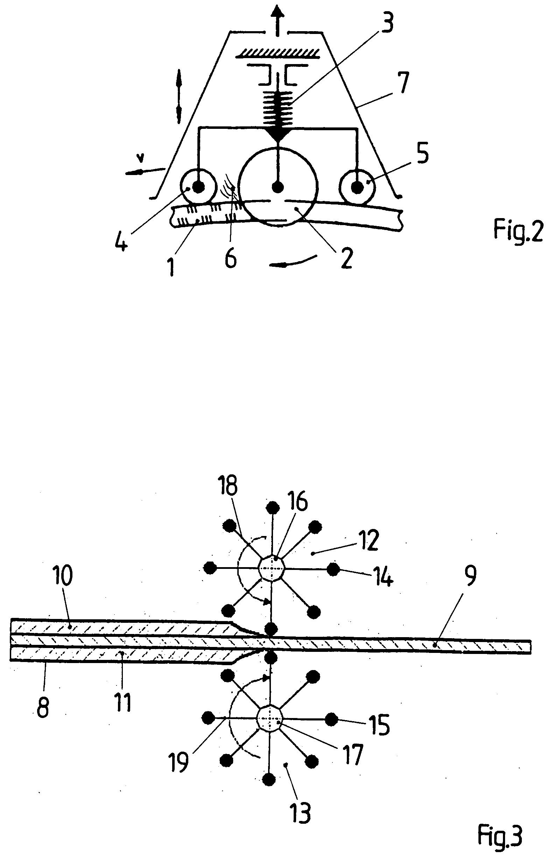

Eine geeignete Vorrichtung ist in der Fig. 2 dargestellt. Die z. B. gewölbte Verbundglasscheibe 1 eines PKWs wird durchtrennt von der im Gegenlauf betriebenen Trennscheibe 2, die mittels Federn 3 gelagert ist. Stützrollen 4 und 5, von denen zur besseren Stabilisierung auch jeweils zwei nebeneinander bzw. seitlich neben der Schleifscheibe angeordnet sein können, tragen zur problemlosen Führung der Trennschleifanordnung während des Schneidvorganges bei. Durch den Betrieb im Gegenlauf wird der beim Trennvorgang freiwerdende Glasstaub 6 nach oben geschleudert, die während des Schneidvorganges mitgeführte Absaughaube 7 sorgt für eine fortlaufende Beseitigung des Glasstaubes 6, so daß der Innenraum des Kraftfahrzeuges frei von Glasteilchen gehalten werden kann. Verklebte und auch herkömmlich befestigte Scheiben sind so problemlos demontierbar.

Für die Durchführung der Erfindung kommt es auch darauf an, daß beim Vorbrechen eine weitgehende Glasfreiheit auf der behandelten Seite der Kunststoffolie oder des -körpers erreicht wird. Darüberhinaus ist der Zustand z. B. der Poly (vinylbutyral) -Folie maßgebend, da ja die Erfindung neben der Aufbereitung vor allem auch die Rückgewinnung der Werkstoffkomponenten zum Zwecke der Wiedereinführung in Produktionsabläufe vorsieht. Dem gleichen Zweck ist auch dienlich die Struktur und Feinheit des Bruchs der Glasscheibe beim Vorbrechen, diese können wesentlich zur Ablösegeschwindigkeit bei der Trennung Glas-Kunststoffolie beitragen.

Aus diesem Grunde hat sich die in der Fig. 3 dargestellte Vorrichtung als besonders vorteilhaft erwiesen. Die vorzubrechende Verbundglasscheibe 8, bestehend aus der PVB-Folie 9 und den beiderseits dieser Folie angeordneten und mit dieser kraftschlüssig verbundenen Glasscheiben 10 und 11. Da im Ausführungsbeispiel die beiden Glasscheiben aus Weißglas bestehen, kann das Vorbrechen auch im gleichen Arbeitsgang erfolgen. Hierzu dienen die beidersetis der Verbundglasscheibe 8 angeordneten Vorrichtungen 12 und 13, deren umlaufende Stoßgewichte 14 und 15 beim Umlauf in Pfeilrichtung durch Stoßeinwirkung mit schräger Stoßrichtung das Glas vorbrechen bzw. schon einen wesentlichen Teil des Glases durch Herunterschlagen von der Folie entfernen. Besteht eine Verbundglasscheibe aus Weiß- und Buntglas wird man zweckmäßig jede Seite gesondert behandeln, die Stoßvorrichtungen sind dann entsprechend einseitig angeordnet und sind nacheinander wirksam.

In allen Fällen ergeben sich nur noch geringe Glasanhaftungen an der Folie, die selbst bei der beidseitigen Behandlung weitgehend unbeschädigt bleibt und damit problemlos der chemischen Trennung bezüglich Polymer und Begleitstoffe unterworfen werden kann. Die Bruchstruktur des Glases ist fein und zeigt keine einheitlichen Bruchverläufe, es bietet dem Trennmittel also gute Angriffsflächen.

Die umlaufenden Stoßvorrichtungen 12 und 13 können nach Art von Speichenrädern aufgebaut sein, die Verbindungselemente zwischen zentralem Antrieb 16 bzw. 17 und Stoßgewichten 14 und 15 können in bevorzugter Ausgestaltung der Erfindung aber auch flexible Stränge, etwa Kettenglieder 18 und 19, sein.

## Patentansprüche

1. Verfahren zur Aufbereitung von aus einem Schichtenaufbau von Glastafeln und mindestens einer Kunststoffolie oder einem Kunststoffkörper bestehenden Verbundglasscheiben und zur Rückgewinnung der einzelnen Werkstoffkomponenten, bei dem die Glasscheiben vorzerkleinert werden, dadurch gekennzeichnet, daß das Glas und die Kunststoffolie bzw. der Kunststoffkörper auf chemischem Wege von einanander getrennt werden.

2. Verfahren nach Anspruch 1, dadurch gekennzeichnet, daß zur chemischen Trennung von Glas und Kunststoffolie bzw. -körper Laugen oder Säuren und/oder deren Salzlösungen oder Tensidlösungen bzw. organische Lösungsmittel in flüssiger oder gasförmiger Phase verwendet werden.

3. Verfahren nach Anspruch 2, dadurch gekennzeichnet, daß zur chemischen Trennung von Glas und Kunststoffolie bzw. -körper wäßrige Laugen verwendet werden.

4. Verfahren nach Anspruch 2, dadurch gekennzeichnet, daß zur chemischen Trennung von Glas und Kunststoffolie bzw. -körper wäßrige Säuren oder Lösungen ihrer Salze verwendet werden.

5. Verfahren nach Anspruch 2, dadurch gekennzeichnet, daß zur chemischen Trennung von Glas und Kunststoffolie bzw. -körper wäßrige Tensidlösungen und/oder Tensidlösungen in organischen Lösungsmitteln oder organische Lösungsmittel als Prozeßflüssigkeit verwendet werden.

6. Verfahren nach Anspruch 1 oder einem der folgenden, dadurch gekennzeichnet, daß die durch chemische Trennung frei gewordenen Glasteile zusätzlich einer Spülung mit Wasser oder organischen Lösungsmitteln unterworfen werden.

7. Verfahren nach Anspruch 1, dadurch gekennzeichnet, daß zur chemischen Trennung von Glas- und Kunststoffolie bzw. -körper und/oder Kunststoffmaterial sowie Begleitstoffe organische Lösungsmittel verwendet werden.

8. Verfahren nach Anspruch 7, dadurch gekennzeichnet, daß das Kunststoffmaterial sowie die Begleitstoffe aus der Lösung durch Extraktion rückgewonnen werden.

9. Verfahren nach Anspruch 7, dadurch gekennzeichnet, daß das Kunststoffmaterial sowie die Folienbegleitstoffe aus der Lösung durch Filtration rückgewonnen werden.

10. Verfahren nach Anspruch 8 oder 9, dadurch gekennzeichnet, daß die Begleitstoffe zur Temperierung der chemischen Prozesse energetisch genutzt werden.

11. Verfahren nach Anspruch 8 oder 9, dadurch gekennzeichnet, daß vor einer energetischen Nutzung der Begleitstoffe eine Aufkonzentrierung und Rückgewinnung des Extraktionsmittels bzw. des Lösungsmittels erfolgt.

12. Verfahren nach Anspruch 1 oder einem der folgenden, dadurch gekennzeichnet, daß zur Vorzerkleinerung der Glasscheiben der Verbundglasscheibe diese vorgebrochen werden.

13. Verfahren nach Anspruch 12, dadurch gekennzeichnet, daß das Vorbrechen der Glasscheiben durch Stoßeinwirkung erfolgt.

14. Verfahren nach Anspruch 13, dadurch gekennzeichnet, daß die Stoßeinwirkung auf die Glasscheiben in einem definierten Winkel zur Glasoberfläche erfolgt.

15. Verfahren nach Anspruch 12 oder einem der folgenden, dadurch gekennzeichnet, daß das Vorbrechen der Glasscheiben einseitig der Kunststoffolie bzw. des -körpers erfolgt.

16. Verfahren nach Anspruch 12 oder einem der folgenden, dadurch gekennzeichnet, daß das Vorbrechen der Glasscheiben auf beiden Seiten der Kunststoffolie bzw. des -körpers gleichzeitig erfolgt.

17. Verfahren nach Anspruch 10 oder einem der folgenden, dadurch gekennzeichnet, daß die beim Vorbrechen der Verbundglasscheibe freiwerdenden Glasteile sortenrein abgeführt werden.

18. Verfahren nach Anspruch 1 oder einem der folgenden, bei dem die Verbundglasscheiben partielle Zusatzbeschichtungen aufweisen, dadurch gekennzeichnet, daß die Zusatzbeschichtungen vor der Vorzerkleinerung heraus- oder abgetrennt werden.

19. Verfahren nach Anspruch 18, bei dem die Verbundglasscheibe mit partieller Zusatzbeschichtung sich im montierten Zustand befindet, dadurch gekennzeichnet, daß die Verbundglasscheibe ohne partielle Zusatzbeschichtung aus der Umgebung herausgetrennt wird.

20. Verfahren nach Anspruch 19, dadurch gekennzeichnet, daß das Heraustrennen der Verbundglasscheibe aus der Umgebung durch ein Trennschleifverfahren oder Glasschneideverfahren erfolgt.

21. Verfahren nach Anspruch 20, dadurch gekennzeichnet, daß das Trennschleifverfahren ein Gegenlaufschleifen ist.

22. Vorrichtung zur Durchführung des Verfahrens nach Anspruch 1 oder einem der folgenden, gekennzeichnet durch ein oder beidseitig der Verbundglasscheibe angeordnete Stoßwerkzeuge in Form umlaufender Stoßgewichte.

23. Vorrichtung zur Durchführung des Verfahrens nach Anspruch 20 oder einem der folgenden in Form eines Trennschleifers, gekennzeichnet durch ein- oder beidseitig der Schleifenscheibe ggf. paarweise angeordnete Führungsrollen.

24. Vorrichtung nach Anspruch 23, dadurch gekennzeichnet. daß die Führungsrollen und/oder die Schleifscheibe federnd gelagert sind.

25. Vorrichtung nach Anspruch 23, gekennzeichnet durch eine mitlaufende Absaugeeinrichtung.
